# EUROPEAN PATENT SPECIFICATION

(11) **EP 3 892 541 B1**
(45) Date of publication and mention of the grant of the patent: **23.08.2023**
(21) Application number: 21166984.1
(22) Date of filing: 06.04.2021
(51) Int. Cl.: B64D 13/08, B64D 11/06, B60N 2/56, A47C 7/74

(54) **PERSONAL HEATING VENTILATION AND AIR CONDITIONING SYSTEM IN AIRCRAFT SEAT**
PERSÖNLICHES HEIZUNGS-, LÜFTUNGS- UND KLIMATISIERUNGSSYSTEM IM FLUGZEUGSITZ
SYSTÈME DE VENTILATION ET DE CLIMATISATION DU CHAUFFAGE INDIVIDUEL DANS LE SIÈGE D'UN AÉRONEF

(30) Priority: 07.04.2020 GB 202005138
(43) Date of publication of application: 13.10.2021
(73) Proprietor: Collins Aerospace Ireland, Limited, T23 XN53 Cork City (IE)
(72) Inventor: LE CAM, Mathieu, Andover, 06232 (US); THIBAUD, Catherine, South Windsor, 06074 (US); PEARSON, Matthew Robert, Hartford, 06106 (US); ST. ROCK, Brian, Andover, 06232 (US)
(74) Representative: Dehns

(56) References cited:
- EP-A1- 3 782 852
- WO-A1-2004/020231
- WO-A1-2020/128444
- CA-A1- 2 599 057
- CN-U- 209 987 795
- US-A1- 2006 273 646
- US-A1- 2009 218 855
- US-A1- 2010 201 166
- US-A1- 2016 059 954

## Description

### TECHNICAL FIELD

The present disclosure relates to aircraft seating arrangements and, in particular, personal heating ventilation and air conditioning systems in aircraft seats.

### BACKGROUND

Climate control of living and working spaces is traditionally provided to relatively large areas, including unoccupied zones, such as entire buildings, offices or suites of rooms within a building. In the case of vehicles, such as aircrafts, the entire cabin is usually cooled or heated as a unit. However, there are many situations in which it can be more beneficial to have more selective and dedicated control over the near environment of each passenger. For example, it is often desirable to provide a personal climate control to a passenger for an improved comfort and flight experience.

Currently, passengers on commercial aircrafts have control on the gaspers providing fresh air from the above head area. The small nozzles are difficult to reach and adjust to meet the passenger's needs in terms of flow and direction. One temperature setpoint is controlled by the cabin crew for the whole cabin area, including unoccupied zones such as volume above heads, the galleys or the aisles.

Further, even with the gaspers oriented towards the head and torso, the passenger's back and other pressure points may remain sweaty while being seated for a few flight hours or after being exposed to hot outdoor conditions of a summer day (e.g. when boarding the aircraft). In winter, the gaspers may provide cold air which may be uncomfortable after boarding the aircraft on a cold winter day.

For such reasons, various types of personal seat control systems were developed mainly in the automotive sector. However, there is a need for an improved control device for a personalised micro-climate in aircraft seats.

Various personal HVAC systems are disclosed in WO 2020 128444 A1, EP 3 782 852 A1, US 2009 218855 A1 and WO 2004 020231 A1.

### SUMMARY OF THE INVENTION

In one aspect, there is provided a personal heating ventilation and air conditioning system (HVAC) for an aircraft seat. The personal HVAC system includes a plurality of aircraft seats, a heating/cooling device disposed on the plurality of aircraft seats, a plurality of branches configured to provide a plurality of flow paths from the heating/cooling device, a plurality of sub-branches provided within the plurality of aircraft seats, wherein the plurality of sub-branches are configured to provide flow from the plurality of branches through the plurality of aircraft seats, and means for expelling air from the plurality of sub-branches to an interior surface of the plurality of aircraft seats .

The heating/cooling device may be one of a combination at least one thermoelectric device and at least one fan, or a combination of at least one heating pad and at least one fan.

The means for expelling air may include one of at least one outlet and/or a plurality of holes.

Further, the plurality of aircraft seats may include at least one of a seat cushion, a seat back support, a seat neck support and/or a headrest. The plurality of aircraft seats may include a first seat, a second seat and a third seat.

Preferably, the plurality of branches may include a first branch, a second branch, and a third branch. The first branch may have a first sub-branch and a second sub-branch, and the second branch may have a first sub-branch and a second sub-branch, and the third branch may have a first sub-branch and a second sub-branch.

The heating/cooling device may be controlled by a controller. Preferably, the system may further include manual mechanic controls for adjusting the heating/cooling device through the controller; and/or a tablet connected to an advanced control system for adjusting the heating/cooling device; and/or a smart phone connected to an advanced control system for adjusting the heating/cooling device.

Further, the plurality of sub-branches may be adjustable.

Preferably, the plurality of aircraft seats may include a material provided over the seat, and wherein there may be an air spacer material provided between the material and the means for expelling air.

In another aspect, there is provided an aircraft cabin including at least one personal HVAC system as described above.

In a further aspect, there is provided a method that includes providing a plurality of aircraft seats, providing a heating/cooling device on the plurality of aircraft seats, providing a plurality of branches that provide a plurality of flow paths from the heating/cooling device, providing a plurality of sub-branches within the plurality of aircraft seats, wherein the plurality of sub-branches provide flow from the plurality of branches through the plurality of aircraft seats, and expelling air from the plurality of sub-branches to an interior surface of the plurality of aircraft seats.

### BRIEF DESCRIPTION OF THE DRAWINGS

Figure 1 shows an example of a seating arrangement with a personal heating ventilation and air conditioning (HVAC) system.
Figure 2 shows an assembly composed of thermoelectric devices, heat sinks and fans, both from a bird's eye view and as a cross section, for use in the seating arrangement shown in Figure 1.
Figure 3 shows an example of a seat that may be used in the seating arrangement shown in Figure 1.
Figure 4A shows the interior of the seat cushion shown in the seat of Figure 3.
Figure 4B shows an example of another side of the interior of the seat cushion shown in the seat of Figure 3.
Figure 5 shows an example of material used to cover the seat shown in Figure 3.

### DETAILED DESCRIPTION

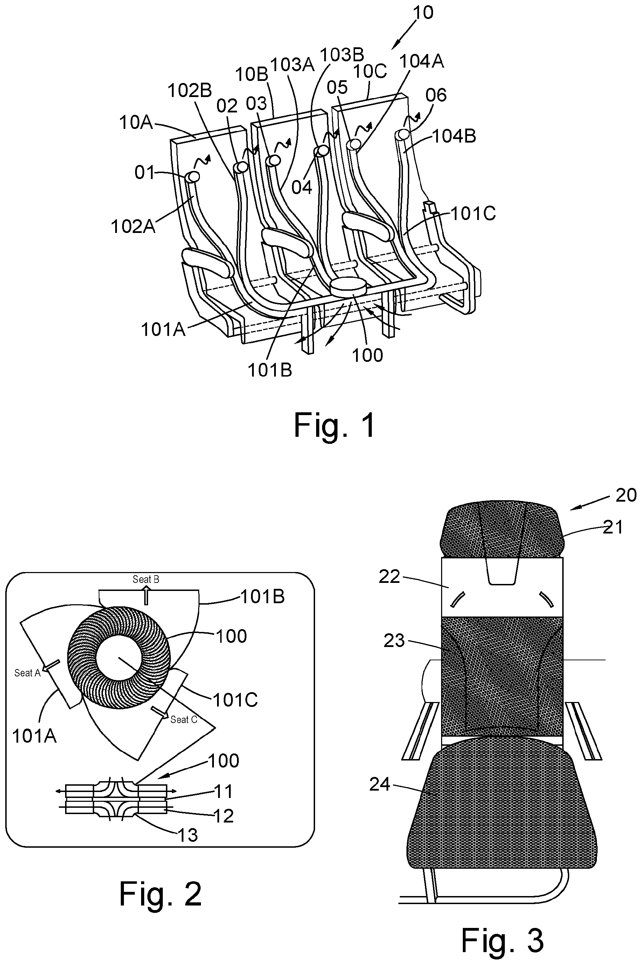

Referring now to Figure 1, there is shown an example of a seating arrangement 10. The seating arrangement 10, as shown in this example, relates to seats for use in an aircraft. As shown in Figure 1, the seating arrangement 10 may include a first seat 10A, a second seat 10B and a third seat 10C. Although in the example shown in Figure 1, there are three seats 10A, 10B and 10C in the seating arrangement 10, it is envisaged that there could be any number of seats greater than one that are required for the aircraft.

If the row of seats on the desired aircraft requires more than three seats in the seating arrangement, it is envisaged that there may be less than, or more than, three seats, but at least two seats. Therefore, Figure 1 is not restricted to a three seat arrangement, such as the seating arrangement 10 including a first seat 10A, a second seat 10B and a third seat 10C.

As shown in Figure 1, there may be provided a heating/cooling device 100 on the underside of second seat 10B. Again, as discussed above, the heating/cooling device 100 may be provided on the underside of more than three seats where necessary. Further, although there is only one heating/cooling device 100 shown in Figure 1, it is envisaged that there may be more than one heating/cooling device 100 on any number of desired seats. In the example shown in Figure 1, the heating/cooling device is provided on the underside of the middle seat (i.e., the second seat 10B).

In the example shown in Figure 1, the heating/cooling device 100 may include a first outlet, a second outlet and a third outlet (not shown). The first outlet may be connected to a first branch 101A providing a first flow path. The second outlet may be connected to a second branch 101B providing a second flow path. The third outlet may be connected to a third branch 101C providing a third flow path. The first, second and third flow path allow for heating or cooling air to flow through the first, second and third branches 101A, 101B and 101C.

Also, as shown in Figure 1, the first branch 101A may split into a first sub-branch 102A and a second sub-branch 102B which may provide flow through a seat cushion, a seat back support and a seat neck support of the first seat 10. Similarly, the second branch 101B may split into a first sub-branch 103A and a second sub-branch 103B which may provide flow through a seat cushion, a seat back support and a seat neck support of the second seat 10B. The third branch 101C may also split into a first sub-branch 104A and a second sub-branch 104B which may provide flow through a seat cushion, a seat back support and a seat neck support of the third seat 10C.

In an example shown in Figure 1, there are provided outlets O1, O2, O3, O4, O5 and O6 on the sub-branches 102A, 102B, 103A, 103B, 104A and 104B. The outlets O1...O6 are provided to expel air to an interior surface of two or more of the first seat 10A, the second seat 10B and the third seat 10C. In the example shown in Figure 1, the outlets 01...06 are directed to expel air to the seat back support through nozzles (not shown) above the shoulders. However, it is envisaged that the outlets O1...O6 could also expel air through the seat neck support, entire seat back support and/or the seat cushion.

Although not shown in Figure 1, and as an alternative, or in addition to the outlets O1...O6 described above, the sub-branches 102A, 102B, 103A, 103B, 104A and 104B may include a plurality of holes along their surfaces to expel air from the sub-branches 102A, 102B, 103A, 103B, 104A and 104B. This would allow for air to be expelled alone their surfaces to one or more of the seat cushion, seat back support and seat neck support. It is to be understood that when the sub-branches 102A, 102B, 103A, 103B, 104A and 104B extend into the interior of the seat where there is a seat neck support, and the seat neck support is adjustable, the sub-branches 102A, 102B, 103A, 103B, 104A and 104B may also adjust with a telescopic arm with the adjustment of the seat neck support. As an example, the sub-branches 102A, 102B, 103A, 103B, 104A and 104B, when supplying air to the back of the head are designed to be adjustable to passengers of varying sizes. The design is integrated in the headrest. The assembly may be composed of an air spacer material and perforated leather similar to the seat cushion assembly described below.

Figure 2 shows an example of the heating/cooling device 100 of Figure 1. Here, it can be seen that the heating/cooling device 100 includes the first branch 101A, the second branch 101B and the third branch 101C. A cross-section of the exemplary heat exchanger 100 can be seen also in Figure 2. In this example, there is provided a layer of thermoelectric devices 11, heat sinks 12 and heat rejection side-blower 13.

These layers provide for active cooling/heating for expelled air through the first branch 101A, the second branch 101B and the third branch 101C. In the example shown in Figure 2, the heating/cooling device 100 is a layer of thermoelectric devices for conditioning the air. Alternatively, but not part of the claimed invention, the heating/cooling device 100 can be dedicated to one seat only and duplicated for each seat. Another alternative, or additional feature, of the heating/cooling device 100 may be a combination of convective cooling with fans (not shown) only and resistive heating with heating pads (not shown). As an example, the heating pads can be integrated in the seat cushion and seat back support. The heating/cooling device could also be used as a cooling purposes only with a fan (not shown) delivering air to the different areas. Further, the fans (not shown) may also be directly integrated in each area; seat cushion, seat back support, seat neck support and headrest.

As an example, the heating/cooling device may comprise a thermoelectric based heat pump configuration, such as that described in US 2018/0216855.

Referring now to Figures 1 and 2, it is envisaged that the heating/cooling device 100 can be adjusted by a passenger when sitting in, for example, one of the first seat 10A, the second seat 10B or the third seat 10C. Controls (not shown) may be electrically connected to the heating/cooling device 100 to alter the heating and/or cooling of the specific seat in which the passenger is sat. In this example, the passenger could manually adjust the heating and/or cooling from the seat in which they are sat by pressing the controls (not shown). Additionally, a tablet or smart phone may be connected to an advanced control system (not shown) in order to adjust the heating and/or cooling on the seat in which the passenger is sat.

Turning now to Figure 3, there is shown an example of a seat 20 that could be provided as a first seat 10A, a second seat 10B or a third seat 10C of Figure 1. As can be seen in Figure 3, the seat 20 includes a seat cushion 24, a seat back support 23, a seat neck support 22 and a seat head support 21. It is envisaged that the sub-branches 102A, 102B, 103A, 103B, 104A and 104B could be provided throughout the seat cushion 24, the seat back support 23, the seat neck support 22 and the seat head support 21. Again, as described above, when the sub-branches 102A, 102B, 103A, 103B, 104A and 104B are provided in an adjustable zone (e.g. the seat head support 21), the sub-branches 102A, 102B, 103A, 103B, 104A and 104B can also adjust with movement of the adjustable zone. Therefore, the passenger can enjoy the heating/cooling after adjusting for comfort.

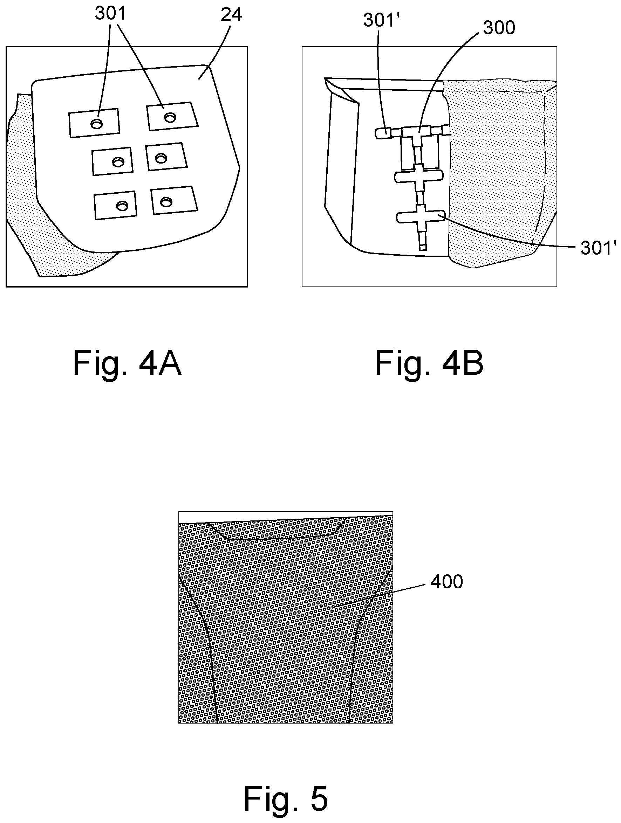

Figures 4A and 4B show an example of an air distribution pad 300 that can be used in addition to the first branch 101A, second branch 101B and third branch 101C of Figure 1. The air distribution pad 300 is shown here to be in the interior of the seat cushion. The air distribution pad 300 may include one or more nozzles 301 for expelling air to the seat cushion 24. As shown in Figure 4B, the air distribution pad 300 may include one or more branches 301' for providing air flow to the one or more nozzles 301. The air distribution pad 300 may be fluidly connected to the first branch 101A, the second branch 101B and/or the third branch 101C shown in Figure 1. The air distribution pad 300 alternatively may be fluidly connected to the sub-branches 102A, 102B, 103A, 103B, 104A and 104B.

Figure 5 shows an example of the material 400 which is provided over the seat. In this Figure, it is shown that the material 400 may be perforated to allow for the air to expel through the seat material 400. In an example, the material 400 may be perforated leather. Of course, other materials are also envisaged and the material 400 is not limited to leather. In addition to the material 400, there may be provided an air spacer material (not shown) between the material 400 and the outlets 01... 06 or plurality of holed that expel air. In this way, the air spacer material acts as a mesh to prevent passengers from blocking the outlet whilst sitting in the seat.

Although the invention has been described in terms of preferred embodiments as set forth above, it should be understood that these embodiments are illustrative only and that the claims are not limited to those embodiments. Those skilled in the art would be able to make modifications falling within the scope of the appended claims.

## Claims

1. A personal heating ventilation and air conditioning system (HVAC) for an aircraft seat, comprising:
a plurality of aircraft seats (10A, 10B, 10C);
a heating/cooling device (100) disposed on the plurality of aircraft seats (10A, 10B, 10C);
a plurality of branches (101A, 101B, 101C) configured to provide a plurality of flow paths from the heating/cooling device (100);
a plurality of sub-branches (102A, 102B, 103A, 103B, 104A, 104B) provided within the plurality of aircraft seats (10A, 10B, 10C), wherein the plurality of sub-branches (102A, 102B, 103A, 103B, 104A, 104B) are configured to provide flow from the plurality of branches (101A, 101B, 101C) through the plurality of aircraft seats (10A, 10B, 10C); and
means for expelling air from the plurality of sub-branches(102A, 102B, 103A, 103B, 104A, 104B) to an interior surface of the plurality of aircraft seats (10A, 10B, 10C).

2. The personal HVAC system of claim 1, wherein the heating/cooling device (100) is one of a combination at least one thermoelectric device and at least one fan, or a combination of at least one heating pad and at least one fan.

3. The personal HVAC system of claim 1 or 2, wherein the means for expelling air includes one of at least one outlet (01... 06) and/or a plurality of holes.

4. The personal HVAC system of any preceding claim, wherein the plurality of aircraft seats includes at least one of a seat cushion, a seat back support, a seat neck support and/or a headrest.

5. The personal HVAC system of any preceding claim, wherein the plurality of aircraft seats includes a first seat (10A), a second seat (10B) and a third seat (10C).

6. The personal HVAC system of any preceding claim, wherein the plurality of branches comprises a first branch (101A), a second branch (101B), and a third branch (101C).

7. The personal HVAC system of claim 6, wherein the first branch (101A) has a first sub-branch (102A), a second sub-branch (102B), and wherein the second branch (101B) has a first sub-branch (103A) and a second sub-branch (103B), and wherein the third branch (101C) has a first sub-branch (104A) and a second sub-branch (104B).

8. The personal HVAC system of any preceding claim, wherein the heating/cooling device (100) is controlled by a controller.

9. The personal HVAC system of claim 8, further comprising:
manual mechanic controls for adjusting the heating/cooling device (100) through the controller; and/or
a tablet connected to an advanced control system for adjusting the heating/cooling device (100); and/or
a smart phone connected to an advanced control system for adjusting the heating/cooling device (100).

10. The personal HVAC system of any preceding claim, wherein the plurality of sub-branches are adjustable.

11. The personal HVAC system of any preceding claim, wherein the plurality of aircraft seats includes a material (400) provided over the seat, and wherein there is provided an air spacer material provided between the material (400) and the means for expelling air.

12. An aircraft cabin comprising at least one personal HVAC system as required by any preceding claim.

13. A method, comprising:
providing a plurality of aircraft seats (10A, 10B, 10C);
providing a heating/cooling device (100) on the plurality of aircraft seats (10A, 10B, 10C);
providing a plurality of branches (101A, 101B, 101C) that provide a plurality of paths from the heating/cooling device (100);
providing a plurality of sub-branches (102A, 102B, 103A, 103B, 104A, 104B) within the plurality of aircraft seats (10A, 10B, 10C), wherein the plurality of sub-branches (102A, 102B, 103A, 103B, 104A, 104B) provide flow from the plurality of branches (101A, 101B, 101C) through the plurality of aircraft seats (10A, 10B, 10C); and
expelling air from the plurality of sub-branches (102A, 102B, 103A, 103B, 104A, 104B) to an interior surface of the plurality of aircraft seats (10A, 10B, 10C).

14. The method of claim 13, wherein the heating/cooling device (100) is one of a combination at least one thermoelectric device and at least one fan, or a combination of at least one heating pad and at least one fan.

## Patentansprüche

1. Persönliches Heizungs-, Lüftungs- und Klimatisierungssystem (HLK) für einen Flugzeugsitz, umfassend:
eine Vielzahl von Flugzeugsitzen (10A, 10B, 10C);
eine Heiz-/Kühlvorrichtung (100), die auf der Vielzahl von Flugzeugsitzen (10A, 10B, 10C) angeordnet ist;
eine Vielzahl von Verzweigungen (101A, 101B, 101C), die dazu konfiguriert ist, eine Vielzahl von Strömungswegen von der Heiz-/Kühlvorrichtung (100) bereitzustellen;
eine Vielzahl von Unterverzweigungen (102A, 102B, 103A, 103B, 104A, 104B), die innerhalb der Vielzahl von Flugzeugsitzen (10A, 10B, 10C) bereitgestellt ist, wobei die Vielzahl von Unterverzweigungen (102A, 102B, 103A, 103B, 104A, 104B) dazu konfiguriert ist, einen Strom von der Vielzahl von Verzweigungen (101A, 101B, 101C) durch die Vielzahl von Flugzeugsitzen (10A, 10B, 10C) bereitstellen; und
Mittel zum Ausstoßen von Luft aus der Vielzahl von Unterverzweigungen (102A, 102B, 103A, 103B, 104A, 104B) zu einer Innenfläche der Vielzahl von Flugzeugsitzen (10A, 10B, 10C).

2. Persönliches HLK-System nach Anspruch 1, wobei die Heiz-/Kühlvorrichtung (100) eines von einer Kombination aus mindestens einer thermoelektrischen Vorrichtung und mindestens einem Lüfter oder eine Kombination aus mindestens einem Heizkissen und mindestens einem Lüfter ist.

3. Persönliches HLK-System nach Anspruch 1 oder 2, wobei das Mittel zum Ausstoßen von Luft eines von mindestens einem Auslass (01...06) und/oder einer Vielzahl von Löchern beinhaltet.

4. Persönliches HLK-System nach einem der vorhergehenden Ansprüche, wobei die Vielzahl von Flugzeugsitzen mindestens eines von einem Sitzkissen, einer Rückenlehnenstütze, einer Sitznackenstütze und/oder einer Kopfstütze beinhaltet.

5. Persönliches HLK-System nach einem der vorhergehenden Ansprüche, wobei die Vielzahl von Flugzeugsitzen einen ersten Sitz (10A), einen zweiten Sitz (10B) und einen dritten Sitz (10C) beinhaltet.

6. Persönliches HLK-System nach einem der vorhergehenden Ansprüche, wobei die Vielzahl von Verzweigungen eine erste Verzweigung (101A), eine zweite Verzweigung (101B) und eine dritte Verzweigung (101C) umfasst.

7. Persönliches HLK-System nach Anspruch 6, wobei die erste Verzweigung (101A) eine erste Unterverzweigung (102A), eine zweite Unterverzweigung (102B) aufweist und wobei die zweite Verzweigung (101B) eine erste Unterverzweigung (103A) und eine zweite Unterverzweigung (103B) aufweist, und wobei die dritte Verzweigung (101C) eine erste Unterverzweigung (104A) und eine zweite Unterverzweigung (104B) aufweist.

8. Persönliches HLK-System nach einem der vorhergehenden Ansprüche, wobei die Heiz-/Kühlvorrichtung (100) von einer Steuerung gesteuert wird.

9. Persönliches HLK-System nach Anspruch 8, ferner umfassend:
manuelle mechanische Bedienelemente zum Einstellen der Heiz-/Kühlvorrichtung (100) über die Steuerung; und/oder
ein Tablet, das mit einem fortschrittlichen Steuersystem zum Einstellen der Heiz-/Kühlvorrichtung (100) verbunden ist; und/oder
ein Smartphone, das mit einem fortschrittlichen Steuersystem zum Einstellen der Heiz-/Kühlvorrichtung (100) verbunden ist.

10. Persönliches HLK-System nach einem der vorhergehenden Ansprüche, wobei die Vielzahl von Unterverzweigungen einstellbar ist.

11. Persönliches HLK-System nach einem der vorhergehenden Ansprüche, wobei die Vielzahl von Flugzeugsitzen ein über dem Sitz bereitgestelltes Material (400) beinhaltet und wobei zwischen dem Material (400) und dem Mittel zum Ausstoßen von Luft ein Luftabstandsmaterial bereitgestellt ist.

12. Flugzeugkabine, umfassend mindestens ein persönliches HLK-System, wie gemäß einem der vorhergehenden Ansprüche erfordert.

13. Verfahren, umfassend:
Bereitstellen einer Vielzahl von Flugzeugsitzen (10A, 10B, 10C); Bereitstellen einer Heiz-/Kühlvorrichtung (100) auf der Vielzahl von Flugzeugsitzen (10A, 10B, 10C);
Bereitstellen einer Vielzahl von Verzweigungen (101A, 101B, 101C), die eine Vielzahl von Strömungswegen von der Heiz-/Kühlvorrichtung (100) bereitstellt;
Bereitstellen einer Vielzahl von Unterverzweigungen (102A, 102B, 103A, 103B, 104A, 104B), die innerhalb der Vielzahl von Flugzeugsitzen (10A, 10B, 10C) bereitgestellt ist, wobei die Vielzahl von Unterverzweigungen (102A, 102B, 103A, 103B, 104A, 104B) einen Strom von der Vielzahl von Verzweigungen (101A, 101B, 101C) durch die Vielzahl von Flugzeugsitzen (10A, 10B, 10C) bereitstellt; und
Ausstoßen von Luft aus der Vielzahl von Unterverzweigungen (102A, 102B, 103A, 103B, 104A, 104B) zu einer Innenfläche der Vielzahl von Flugzeugsitzen (10A, 10B, 10C).

14. Verfahren nach Anspruch 13, wobei die Heiz-/Kühlvorrichtung (100) eines von einer Kombination aus mindestens einer thermoelektrischen Vorrichtung und mindestens einem Lüfter oder eine Kombination aus mindestens einem Heizkissen und mindestens einem Lüfter ist.

## Revendications

1. Système individuel de chauffage, ventilation et climatisation (HVAC) pour un siège d'aéronef, comprenant :
une pluralité de sièges d'aéronef (10A, 10B, 10C) ;
un dispositif de chauffage/refroidissement (100) disposé sur la pluralité de sièges d'aéronef (10A, 10B, 10C) ;
une pluralité de branches (101A, 101B, 101C) configurées pour fournir une pluralité de trajets d'écoulement à partir du dispositif de chauffage/refroidissement (100) ;
une pluralité de sous-branches (102A, 102B, 103A, 103B, 104A, 104B) prévues dans la pluralité de sièges d'aéronef (10A, 10B, 10C), dans lequel la pluralité de sous-branches (102A, 102B, 103A, 103B, 104A, 104B) sont configurées pour fournir un flux depuis la pluralité de branches (101A, 101B, 101C) à travers la pluralité de sièges d'aéronef (10A, 10B, 10C) ; et
un moyen d'expulsion d'air de la pluralité de sous-branches (102A, 102B, 103A, 103B, 104A, 104B) vers une surface intérieure de la pluralité de sièges d'aéronef (10A, 10B, 10C).

2. Système individuel de HVAC selon la revendication 1, dans lequel le dispositif de chauffage/refroidissement (100) est l'une d'une combinaison d'au moins un dispositif thermoélectrique et d'au moins un ventilateur, ou d'une combinaison d'au moins un coussin chauffant et d'au moins un ventilateur.

3. Système individuel de HVAC selon la revendication 1 ou 2, dans lequel le moyen d'expulsion d'air comporte l'une d'au moins une sortie (01...06) et/ou une pluralité de trous.

4. Système individuel de HVAC selon une quelconque revendication précédente, dans lequel la pluralité de sièges d'aéronef comporte au moins l'un d'un coussin de siège, d'un support de dossier de siège, d'un support de nuque de siège et/ou d'un appui-tête.

5. Système individuel de HVAC selon une quelconque revendication précédente, dans lequel la pluralité de sièges d'aéronef comporte un premier siège (10A), un deuxième siège (10B) et un troisième siège (10C).

6. Système individuel de HVAC selon une quelconque revendication précédente, dans lequel la pluralité de branches comprend une première branche (101A), une deuxième branche (101B) et une troisième branche (101C).

7. Système individuel de HVAC selon la revendication 6, dans lequel la première branche (101A) a une première sous-branche (102A), une seconde sous-branche (102B), et dans lequel la deuxième branche (101B) a une première sous-branche (103A) et une seconde sous-branche (103B), et dans lequel la troisième branche (101C) a une première sous-branche (104A) et une seconde sous-branche (104B).

8. Système individuel de HVAC selon une quelconque revendication précédente, dans lequel le dispositif de chauffage/refroidissement (100) est commandé par un dispositif de commande.

9. Système individuel de HVAC selon la revendication 8, comprenant en outre :
des commandes mécaniques manuelles pour ajuster le dispositif de chauffage/refroidissement (100) par l'intermédiaire du dispositif de commande ; et/ou
une tablette connectée à un système de commande avancé pour ajuster le dispositif de chauffage/refroidissement (100) ; et/ou
un téléphone intelligent connecté à un système de commande avancé pour ajuster le dispositif de chauffage/refroidissement (100) .

10. Système individuel de HVAC selon une quelconque revendication précédente, dans lequel la pluralité de sous-branches est ajustable.

11. Système individuel de HVAC selon une quelconque revendication précédente, dans lequel la pluralité de sièges d'aéronef comporte un matériau (400) prévu sur le siège, et dans lequel il est prévu un matériau d'espacement d'air prévu entre le matériau (400) et le moyen d'expulsion d'air.

12. Cabine d'aéronef comprenant au moins un système individuel de HVAC selon une quelconque revendication précédente.

13. Procédé, comprenant :
le fait de prévoir une pluralité de sièges d'aéronef (10A, 10B, 10C) ;
le fait de prévoir un dispositif de chauffage/refroidissement (100) sur la pluralité de sièges d'aéronef (10A, 10B, 10C) ;
le fait de prévoir une pluralité de branches (101A, 101B, 101C) qui fournissent une pluralité de trajets à partir du dispositif de chauffage/refroidissement (100) ;
le fait de prévoir une pluralité de sous-branches (102A, 102B, 103A, 103B, 104A, 104B) dans la pluralité de sièges d'aéronef (10A, 10B, 10C), dans lequel la pluralité de sous-branches (102A, 102B, 103A, 103B, 104A, 104B) fournissent un flux depuis la pluralité de branches (101A, 101B, 101C) à travers la pluralité de sièges d'aéronef (10A, 10B, 10C) ; et
l'expulsion d'air de la pluralité de sous-branches (102A, 102B, 103A, 103B, 104A, 104B) vers une surface intérieure de la pluralité de sièges d'aéronef (10A, 10B, 10C).

14. Procédé selon la revendication 13, dans lequel le dispositif de chauffage/refroidissement (100) est l'une d'une combinaison d'au moins un dispositif thermoélectrique et d'au moins un ventilateur, ou d'une combinaison d'au moins un coussin chauffant et d'au moins un ventilateur.
